# EUROPEAN PATENT SPECIFICATION

(11) **EP 2 675 928 B1**
(45) Date of publication and mention of the grant of the patent: **24.12.2014**
(21) Application number: 12704795.9
(22) Date of filing: 17.02.2012
(51) Int. Cl.: B21C 37/08, B21D 31/00, B60G 7/00, C21D 8/10, C21D 9/00, C21D 9/08, C21D 9/50, C21D 1/30, F16L 9/02, C21D 9/46, C21D 8/02

(54) **METHOD FOR MANUFACTURING HIGH-STRENGTH STEEL SHEET PARTS SUBJECT IN USE TO FATIGUE STRESSES**
HERSTELLUNGSMETHODE FÜR HOCHFESTE STAHLTEILE FÜR DEN EINSATZ UNTER ERMÜDUNGSBEANSPRUCHUNG
PROCÉDÉ DE FABRICATION DE PIÈCES DE TÔLE D'ACIER HAUTE RÉSISTANCE QUI, LORS DE L'UTILISATION, SONT SOUMISES À DES CONTRAINTES DE FATIGUE

(30) Priority: 18.02.2011 IT TO20110139
(43) Date of publication of application: 25.12.2013
(73) Proprietor: Sistemi Sospensioni S.p.A., 20011 Corbetta (Milano) (IT)
(72) Inventor: SANTINI, Andrea, I-10093 Collegno (Torino) (IT); BORGNA, Guido, I-10139 Torino (IT); MONCHIERO, Piero, I-10137 Torino (IT)
(74) Representative: Rondano, Davide
(86) International application number: PCT/EP2012/052757
(87) International publication number: WO 2012/110627

(56) References cited:
- EP-A1- 2 045 348
- JP-A- 7 090 375
- US-A- 3 533 157
- US-A1- 2006 108 035
- Wallwork HT UK - Heat Treatment and Hard Coating Service: "Stress Relieving & Normalising", , 13 May 2008 (2008-05-13), XP002659169, Website Retrieved from the Internet: URL:http://www.wallworkht.co.uk/heattreat0 7.php [retrieved on 2011-09-15]

## Description

The present invention relates to a method for manufacturing high-strength steel sheet parts suitable for fatigue applications, i.e. parts which are subject in use to fatigue stresses. In particular, although not exclusively, the invention relates to the manufacturing of high-strength steel sheet parts intended to be used on vehicle suspension systems. In the following description and claims, the expression "high-strength" is to be intended as referred to a steel having a yield strength greater than 420 MPa.

As is known, plastic forming operations carried out on steel sheets leave stress states in the material, the so-called residual stresses, which turn out to be of the same order of magnitude as the yield strength of the material. The same occurs when a weld bead is made on a steel sheet: depending on how much the welded joint is free to deform after cooling, residual stresses are generated in the material which are great in the vicinity of the weld bead and decrease as the distance from the weld bead increases. These residual stress states of the material remain in the finished part throughout its service life. If the finished part is requested to bear fatigue stresses (as is the case, for instance, with vehicle suspension parts), then the residual stress state usually reduces the ability of the part to meet the prescribed requirements in terms of fatigue life. The higher the quality of the steel of which the part is made, the larger the effect of reduction in the fatigue life of the part. This is due to the fact that the fatigue limit is less dependent on the yield strength of the material than the residual stress level, which on the contrary is directly linked to the yield strength of the material. In order to compensate the reduction in the fatigue life due to the residual stress state in the material, either the thickness of the material is increased (with resulting impact on the weight and cost of the part) or special materials are adopted (for instance, boron steel) which are subjected to heat treatment, namely to quenching followed by tempering, such a heat treatment allowing to obtain high mechanical properties and at the same time to reduce (or even eliminate) the residual stress state due to the forming process and to the quenching treatment.

In case of metal sheet parts for vehicle suspension systems obtained by forming tubular blanks, the manufacturing method comprises first of all a so-called tube making phase, i.e. a phase of production of a tubular blank, which typically consists in the following operations:
1) producing ribbons having a width equal to the required circumference of the tube starting from a coil of cold- or hot-rolled steel sheet;
2) unwinding the ribbons and producing the tube continuously by carrying out in sequence forming operations;
3) welding the tube longitudinally (i.e. along a direction parallel to the axis of the tube) without addition of material, and also scarfing the tube, if necessary; and
4) straightening the tube.

The tube blank thus obtained is then formed (typically by cold-stamping and/or hydro-forming) so as to be given the desired final geometry. For instance, in case of a cross-member for a twist-beam axle rear suspension for a motor-vehicle, the tube blank is bent and/or squashed so that its own longitudinal axis is given the desired course and/or its cross-section is given the desired shape. In case of use of normal structural steels (for instance Fe510D) or of steels for heat treatment (for instance 20MnB5), a normalizing treatment is performed before forming in order to reduce the high residual stress state generated by the tube making process, which is typically slightly less than the yield strength of the material. Moreover, in case of steels for heat treatment the formed part is finally subjected to a quenching and tempering treatment, in order to reach the high mechanical properties required by the specific mission of the part. A shot-peening operation, if necessary, may follow the quenching and tempering treatment in order to further increase the fatigue life of the part. In case of use of normal structural steels, the parts thus obtained have low mechanical properties, but low production costs, whereas the use of steels for heat treatment allows to obtain parts having very high mechanical properties, but high production costs.

A method for manufacturing a steel tube is known from EP 2 045 348, wherein the tube is first subjected to hot-bending (at a temperature of about 1000 °C) and finally to a quenching and tempering treatment. A similar method is known from JP 7 090375, since according to this document the steel tube is also first hot-formed and then subjected to a quenching and tempering treatment. US 3 533 157 discloses a method for manufacturing tubes and mentions, as the only heat treatment used in the method, the normalizing treatment, which involves, as is known, heating up to a temperature higher (typically by about 50 °C) than the critical zone or critical interval of the steel.

It is the object of the present invention to provide a method for manufacturing steel sheet parts subject in use to fatigue stresses, such as for instance parts for vehicle suspension systems, which allows to ensure that high mechanical properties are obtained, which are much higher than those obtainable using normal structural steels, but which requires less time and lower costs than those required in case of use of steels for heat treatment.

This and other objects are fully achieved according to the invention by virtue of a method comprising the steps set forth in the enclosed independent claim 1.

Advantageous modes for carrying out the method according to the invention are set forth in the dependent claims, the content of which is to be intended as forming an integral and integrating part of the following description.

In short, the invention is based on the idea of using a high-strength steel, in particular a high-strength low-alloy steel (which, as everyone knows, is a kind of steel not suitable for quenching), and of carrying out, after the forming step, a stress relieving treatment as the only heat treatment, instead of a quenching and tempering treatment. The stress relieving treatment consists, in per-se-known manner, in keeping the part for a given time (for instance, 45 to 60 minutes) at a temperature lower than the critical interval of the steel (for instance, at a temperature comprised in the range from 530 °C to 580 °C) and then leaving the part to cool in air. The stress relieving treatment allows to reduce, if not even to completely eliminate, the residual stresses generated in the material as a result of processing operations (not of heat treatments) carried out in the previous steps of the manufacturing method (tube making, in case of a part obtained from a tube blank, and forming), and therefore to obtain parts having high fatigue life characteristics. In this connection, it is to be noted that in those parts which are intended to be used on vehicle suspension systems the fatigue life is one of the most important requirements. A further advantage is that the quenching treatment is avoided and therefore the associated times and costs are saved.

Moreover, the stress relieving treatment requires temperatures and times lower than those required by the tempering treatment (typically between 590 °C and 610 °C for about 2 hours). The savings in terms of cycle-times and costs (both processing costs and apparatus costs) with respect to the use of steels for heat treatment and to the carrying out of a quenching and tempering treatment at the end of the forming steps are therefore evident. Moreover, the quenching and tempering treatment significantly changes the metallographic structure of the material and therefore requires special quality controls on the finished part to check the treatment has been correctly carried out. The method according to the invention, on the contrary, does not require these special controls, since it does not provide for subjecting the already formed part to a quenching and tempering treatment, but only to a stress relieving treatment.

For the purposes of the present invention, the term "forming" is used to designate any plastic forming process carried out on the sheet metal, such as in particular a tube making process, a shaping process, a cold-stamping process or a hydro-forming process. Irrespective of the specific process (or of the specific processes, as several forming processes of different kind could be carried out one after the other) used to form the part starting from a sheet of high-strength steel, according to the invention a stress relieving treatment is carried out as the only heat treatment after the part has been formed, so as to reduce as much as possible, if not even to completely eliminate, the residual stress state generated in the material as a result of the forming.

Further features and advantages of the method according to the invention will be more evident from the following detailed description of a preferred mode for carrying out the method.

The manufacturing method according to the invention provides first of all for obtaining a part, such as for instance a vehicle suspension part, by means of one or more forming operations starting from a sheet of high-strength steel, in particular of high-strength low-alloy steel, such as for instance S600MC steel. The part may be for instance a cross-member for a twist-beam axle suspension, a longitudinal or transverse arm for an independent suspension or for an interconnected suspension, a frame for a front suspension, etc. In case of a tubular or profiled part, such as for instance a cross-member for a twist-beam axle suspension, the method will include first a tube making process (or, more generally, a shaping process) such as the one described in the introductory part of the description of the present application, so as to obtain a tube blank which will be then subjected to the outright forming process. The forming process may be performed by cold-stamping and/or by hydro-forming. During the forming process, other operations on the part, such as for instance bead welding operations, may obviously be also carried out. Also making welding beads generates residual stresses in the material.

After the forming process (and the bead welding, if any), the part thus obtained is subjected to a stress relieving heat treatment in order to reduce to the minimum the residual stress state generated in the material as a result of the plastic deformation undergone during the forming process, and also as a result of the tube making or shaping process or as a result of the bead welding. The stress relieving treatment is for instance carried out keeping the already formed part at a temperature comprised for instance in the range from 530 °C to 580 °C for a time comprised for instance in the range from 45 to 60 minutes and then leaving the part to cool in air. The above-indicated temperature and time ranges for the stress relieving treatment are to be considered as applicable to high-strength low-alloy steels, such as for instance S550MC and S700MC steels, and might therefore change in case of use of high-strength steels of different kind.

The Applicant has experimentally noticed that the fatigue life of formed tubes made of S700MC steel is increased by about ten times if the tube is subjected to a stress relieving heat treatment after being stamped. Similar fatigue tests have been carried out by the Applicant on formed tubes made of S550MC steel and have given as a result a fatigue life increased by at least two/three times (the tests have been stopped for time reasons and no breakages have been detected) with respect to the one of similar tubes not subjected to a stress relieving treatment.

In the light of the preceding description, it is evident that the idea of subjecting a formed part of high-strength steel sheet only to a stress relieving heat treatment after the forming process allows to obtain parts with high mechanical properties, in particular high fatigue life, in less time and at lower costs than those required in case the part is subjected to a quenching and tempering treatment after the forming process. The method according to the invention is therefore particularly suitable for being used for the manufacturing of parts for vehicle suspension systems, as these parts must meet very strict requirements in terms of fatigue life and must be produced with the lowest times and costs possible.

## Claims

1. Method for manufacturing sheet metal parts of high-strength steel which are subject in use to fatigue, the method comprising in the order the steps of:
a) carrying out one or more forming operations on a sheet of high-strength steel so as to provide the part with the desired geometry; and
b) subjecting the part thus formed to a single heat treatment consisting only in a stress relieving treatment, which is carried out keeping the formed part at a temperature comprised in the range from 530 °C to 580 °C for a time comprised in the range from 45 to 60 minutes and then leaving the part to cool in air.

2. Method according to claim 1, wherein the forming step a) is carried out using a sheet of high-strength low-alloy steel.

3. Method according to claim 1 or claim 2, wherein the forming of the part carried out at step a) comprises at least one of the following operations: tube making, shaping, cold-forming and hydro-forming.

4. Method according to any of the preceding claims, further comprising the step of carrying out at least one bead welding on the part, wherein such a welding step is carried out before the stress relieving step b).

## Patentansprüche

1. Verfahren zur Herstellung von Blechteilen aus hochfestem Stahl, welche während der Benutzung der Ermüdung unterliegen, wobei das Verfahren die aufeinanderfolgenden Schritte umfasst:
a) Durchführen eines oder mehrerer Umformungsvorgänge an einem Blech aus hochfestem Stahl, um dem Blechteil die gewünschte Form zu geben; und
b) Unterziehen des derartig geformten Blechteils einer einzelnen Wärmebehandlung, welche lediglich aus einem Spannungsarmglühen besteht, welches durchgeführt wird, indem das Blechteil bei einer Temperatur im Bereich von 530°C bis 580°C für eine Dauer im Bereich von 45 bis 60 Minuten gehalten wird und daraufhin das Blechteil an Luft abgekühlt gelassen wird.

2. Verfahren nach Anspruch 1, wobei bei der Durchführung des Umformschritts a) ein Blech aus hochfestem, niedriglegiertem Stahl verwendet wird.

3. Verfahren nach Anspruch 1 oder 2, wobei das Formen des Blechteils, welches in Schritt a) durchgeführt wird, wenigstens einen der folgenden Vorgänge umfasst:
Rohrherstellung, Formgebung, Kaltverformung und Hydroforming.

4. Verfahren nach einem der vorhergehenden Ansprüche, umfassend den weiteren Schritt der Durchführung wenigstens einer Nahtschweißung an dem Blechteil, wobei ein derartiger Schweißvorgang vor dem Spannungsarmglühen gemäß Schritt b) durchgeführt wird.

## Revendications

1. Procédé de fabrication de pièces de tôle métallique en acier à haute résistance qui, en cours d'utilisation, sont soumises à la fatigue, le procédé comportant, dans l'ordre, les étapes consistant à :
a) réaliser une ou plusieurs opérations de formage sur une tôle d'acier à haute résistance de façon à conférer à la pièce la géométrie souhaitée ; et
b) soumettre la pièce ainsi formée à un seul traitement thermique consistant uniquement en un traitement de relaxation de contraintes, qui est réalisé en maintenant la pièce formée à une température comprise dans la plage allant de 530°C à 580°C pendant une durée comprise dans la plage allant de 45 à 60 minutes, puis en laissant la pièce refroidir à l'air.

2. Procédé selon la revendication 1, l'étape a) de formage étant réalisée en utilisant une tôle en acier à haute résistance faiblement allié.

3. Procédé selon la revendication 1 ou la revendication 2, le formage de la pièce réalisé à l'étape a) comportant au moins une des opérations suivantes : fabrication de tubes, façonnage, formage à froid et hydroformage.

4. Procédé selon l'une quelconque des revendications précédentes, comportant en outre l'étape consistant à réaliser au moins une soudure avec cordon sur la pièce, une telle étape de soudage étant réalisée avant l'étape b) de relaxation de contraintes.
